# EUROPÄISCHE PATENTSCHRIFT

(11) **EP 1 681 198 B1**
(45) Veröffentlichungstag und Bekanntmachung des Hinweises auf die Patenterteilung: **26.11.2008**
(21) Anmeldenummer: 05027150.1
(22) Anmeldetag: 13.12.2005
(51) Int. Cl.: B60N 2/24, B60N 2/30, B62D 47/02

(54) **Vorrichtung zur Ermöglichung des Zugangs zu einem abgeschlossenen Raum innerhalb eines Kraftfahrzeugs**
Device for allowing access to a closed space inside an automotive vehicle
Dispositif pour permettre l'accés à un espace clos de l'intérieur d'un véhicule automobile

(30) Priorität: 15.01.2005 DE 102005001969
(43) Veröffentlichungstag der Anmeldung: 19.07.2006
(73) Patentinhaber: Daimler AG, 70327 Stuttgart (DE)
(72) Erfinder: Gehrmann, Joachim, 89075 Ulm (DE)

(56) Entgegenhaltungen:
- EP-A- 0 033 823
- EP-B1- 0 794 879
- DE-U1- 9 320 377
- FR-A- 1 284 377
- FR-A1- 2 812 591

## Beschreibung

Die Erfindung betrifft eine Vorrichtung zur Ermöglichung des Zugangs zu einem abgeschlossenen Raum innerhalb eines Kraftfahrzeugs, insbesondere eines Omnibusses, nach der im Oberbegriff von Anspruch 1 näher definierten Art. Des Weiteren betrifft die Erfindung ein Kraftfahrzeug, insbesondere einen Omnibus.

Aus dem allgemeinen Stand der Technik sind sogenannte Fahrerruheräume in Omnibussen bekannt, welche vom Innenraum des Omnibusses her zugänglich sind und beispielsweise mittels eines Rollladens verschlossen werden können. In derartige Fahrerruheräume können sich die Fahrer der Omnibusse beispielsweise in Pausen zurückziehen.

Des Weiteren ist es aus dem allgemeinen Stand der Technik bekannt, in einem vorderen Einstiegsbereich eines Omnibusses einen zusätzlichen Sitz anzubringen, welcher beispielsweise während der Fahrt von einem Reiseleiter oder einer sonstigen Begleitperson eingenommen werden kann.

Meist ist es jedoch aufgrund dieses Sitzes nicht möglich, im vorderen Einstiegsbereich des Omnibusses einen der oben beschriebenen Fahrerruheräume vorzusehen. Umgekehrt muss, wenn der Omnibus im vorderen Einstiegsbereich mit einem Fahrerruheraum ausgestattet ist, auf einen zusätzlichen Sitz in diesem Bereich verzichtet werden.

Aus der EP 0 794 879 B1 ist eine klappbare Sitzeinheit für Fahrzeuge bekannt, welche vollständig zusammengeklappt und in einer seitlichen Wandung des Fahrzeugs versenkt werden kann.

Die DE 71 22 946 U1 beschreibt einen an Auslegern angebrachten Hubsitz, welcher mittels einer parallelogrammartigen Führung zwischen zwei Positionen verstellbar ist. Hierbei ist jedoch nachteilig, dass diese Konstruktion einen erheblichen Platzbedarf erfordert und darüber hinaus eine zusätzliche Arretierung notwendig wäre, um einen Raumgewinn in der vertikalen Richtung erzielen zu können.

Die Druckschrift FR 2 812 591 A1 offenbart ein Nutzfahrzeug einschließlich eines Innenraums, welcher einen vorderen Bereich sowie einen von dem vorderen Bereich abtrennbaren rückwärtigen Bereich aufweist. Dabei ist eine Mehrzahl von Querträgern vorgesehen, welche an Seitenwänden mittels eines Zugmittels geführt sind. Die Querträger können als eine Trennwand zwischen dem vorderen und dem rückwärtigen Bereich des Innenraums dienen. Durch ein Verschieben der Querträger kann der rückwärtige Bereich freigegeben werden. Weiterhin können die Querträger in Form eines im rückwärtigen Bereich angeordneten Sitzes ausgestaltet werden.

Es ist Aufgabe der vorliegenden Erfindung, eine Vorrichtung zur Ermöglichung des Zugangs zu einem abgeschlossenen Raum innerhalb eines Kraftfahrzeugs zu schaffen, mit welcher der Platz vor dem abgeschlossenen Raum genutzt werden kann, ohne den Zugang zu dem Raum selbst zu erschweren.

Erfindungsgemäß wird diese Aufgabe durch die in Anspruch 1 genannten Merkmale gelöst.

Gemäß der vorliegenden Erfindung ist also vor der Öffnung des abgeschlossenen Raums ein Fahrzeugeinbauteil angeordnet, wodurch eine sinnvolle Nutzung des Bereichs vor diesem Raum möglich ist. Dadurch, dass dieses Fahrzeugeinbauteil in eine die Öffnung versperrende Position, in welcher das Fahrzeugeinbauteil für eine neben der Versperrfunktion andere zweite Funktion nutzbar ist, und eine die Öffnung zugänglich machende Position bewegbar ist, kann sich eine Person vollkommen problemlos Zugang zu dem abgeschlossenen Raum verschaffen, indem das Fahrzeugeinbauteil in seine obere Position bewegt wird.

Eine bezüglich ihrer Konstruktion und insbesondere ihrer Bedienbarkeit sehr einfache Lösung für die Bewegbarkeit des Fahrzeugeinbauteils zwischen den wenigstens zwei Positionen ergibt sich, wenn das Fahrzeugeinbauteil entlang wenigstens einer Führungsschiene in einer im Wesentlichen vertikalen Richtung verschieblich ist.

Hierbei kann außerdem vorgesehen sein, dass das Fahrzeugeinbauteil gegenüber der wenigstens einen Führungsschiene mittels jeweiliger Verriegelungseinrichtungen in der oberen Position und der unteren Position verriegelbar ist. Durch eine solche Verriegelung in der oberen bzw. der unteren Position wird ein ungewolltes Bewegen des Fahrzeugeinbauteils vermieden, wodurch sich insgesamt eine sehr sichere Vorrichtung ergibt.

In einer besonders vorteilhaften Ausführungsform der Erfindung kann des Weiteren vorgesehen sein, dass das Fahrzeugeinbauteil ein Sitz ist. Ein derartiger Sitz, der einer zusätzlichen Person, beispielsweise einem sich im Eingangsbereich des Kraftfahrzeugs befindlichen Reiseleiter, Platz bietet, stellt eine ideale Kombination mit der Zugänglichmachung des abgeschlossenen Raums innerhalb des Kraftfahrzeugs dar, da der Raum üblicherweise nur dann benötigt wird, wenn der Sitz gerade nicht gebraucht wird.

Ein Kraftfahrzeug mit einem abgeschlossenen Raum und einer erfindungsgemäßen Vorrichtung ist den Merkmalen von Anspruch 12 zu entnehmen.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Dabei zeigen:
- Fig. 1: Eine Draufsicht auf einen Innenraums eines erfindungsgemäßen Kraftfahrzeugs;
- Fig. 2: eine Seitenansicht nach dem Pfeil II aus Fig. 1; und
- Fig. 3: eine perspektivische Ansicht der erfindungsgemäßen Vorrichtung.

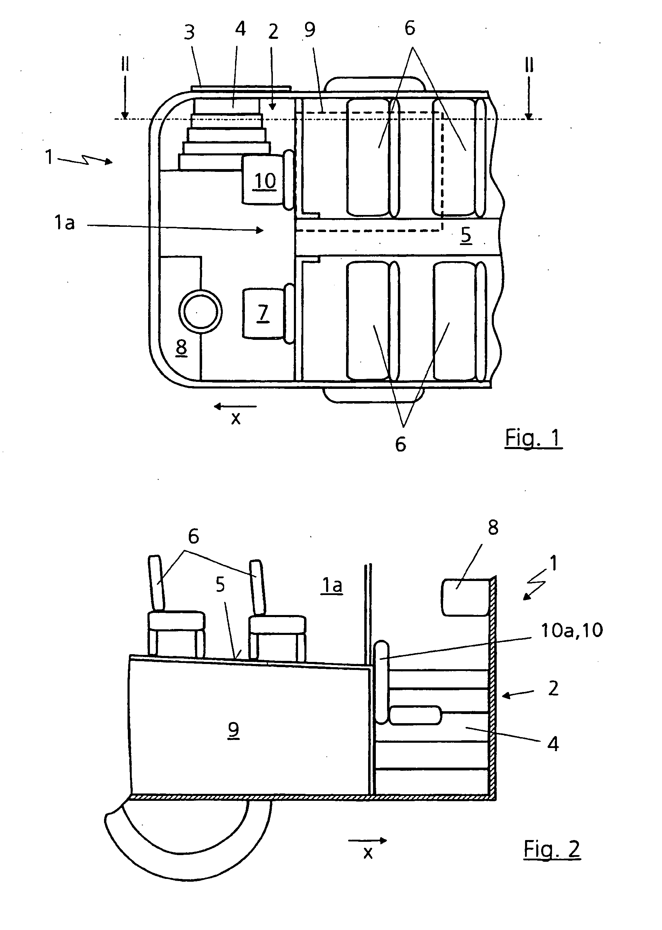

In Fig. 1 ist auf äußerst schematische Weise ein Kraftfahrzeug 1 mit einem Innenraum 1a teilweise dargestellt. Bei dem Kraftfahrzeug 1 handelt es sich im vorliegenden Fall um einen Omnibus, der an seinem vorderen Ende einen vorderen Einstiegsbereich 2 aufweist. In dem Einstiegsbereich 2, der mittels einer Tür 3 verschließbar ist, befindet sich in an sich bekannter weise eine Treppe 4, welche zu einem Mittelgang 5 führt. Auf beiden Seiten des Mittelgangs 5 befinden sich in ebenfalls an sich bekannter Weise jeweilige Sitzbänke 6, welche nicht dargestellten Passagieren des Kraftfahrzeugs 1 Platz bieten. Selbstverständlich kann das Kraftfahrzeug 1 in seinem hinteren Bereich einen weiteren Einstiegsbereich aufweisen, dieser ist in den Figuren jedoch nicht dargestellt.

Im vorderen Bereich des Kraftfahrzeugs 1 befindet sich des Weiteren ein Fahrersitz 7, vor dem sich ein Armaturenbrett 8 erstreckt. In der mit "X" bezeichneten Fahrtrichtung des Kraftfahrzeugs 1 betrachtet hinter der Treppe 4 ist ein mit gestrichelten Linien dargestellter, abgeschlossener Raum 9 vorgesehen, welcher durch die Struktur des Kraftfahrzeugs 1 gebildet ist und für den nicht dargestellten Fahrer des Kraftfahrzeugs 1 beispielsweise in Ruhepausen als Ruheraum benutzt werden kann und daher auch als Fahrerruheraum bezeichnet wird. In Fahrtrichtung des Kraftfahrzeugs 1 ist vor dem Raum 9 ein Fahrzeugeinbauteil 10 vorgesehen, welches in dem dargestellten Ausführungsbeispiel als Sitz 10a ausgebildet ist.

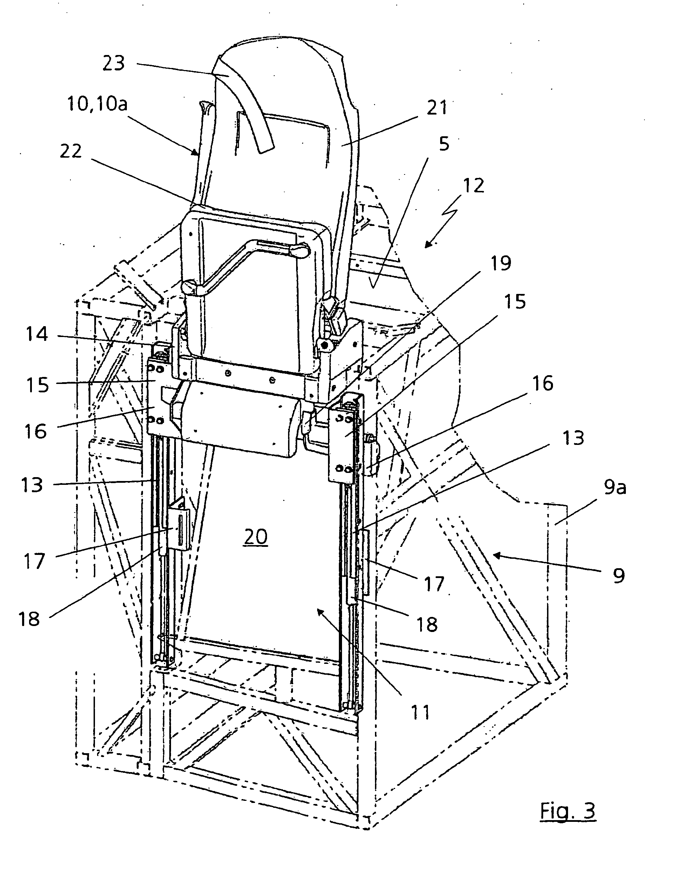

In Fig. 2 ist der Einstiegsbereich 2 des Kraftfahrzeugs 1 in seiner Seitenansicht dargestellt. Dort ist erkennbar, dass der Sitz 10a unmittelbar vor dem Raum 9 angeordnet ist und in seiner dargestellten unteren Position eine den Zugang zu dem abgeschlossenen Raum 9 ermöglichende, für eine Person, insbesondere für den Fahrer des Kraftfahrzeugs 1, zugängliche Öffnung 11 versperrt. Der Sitz 10a ist insbesondere zur Benutzung durch Begleitpersonal, wie z.B. einen Reiseleiter oder dergleichen, vorgesehen. Die untere Position stellt die Gebrauchslage des Sitzes 10a dar, in der sich die nicht dargestellte Begleitperson auf demselben befindet. Um den Zugang zu dem abgeschlossenen Raum 9 zu ermöglichen, ist eine Vorrichtung 12 vorgesehen, welche unter Bezugnahme auf Fig. 3 nachfolgend näher beschrieben wird.

Im Gegensatz zu der Darstellung gemäß Fig. 2 befindet sich das Fahrzeugeinbauteil 10 in der Darstellung gemäß Fig. 3 in seiner oberen Position, wodurch die Öffnung 11 zu dem abgeschlossenen Raum 9 von dem Innenraum 1a des Kraftfahrzeugs 1 her zugänglich ist. Hierzu ist das Fahrzeugeinbauteil 10 mittels der Vorrichtung 12 zwischen der unteren Position gemäß Fig. 2 und der oberen Position gemäß Fig. 3 bewegbar. Im vorliegenden Fall weist die Vorrichtung 12 zwei an einem den Raum 9 umgebenden Rahmen 9a angebrachte, in vertikaler Richtung des Kraftfahrzeugs 1 verlaufende Führungsschienen 13 auf, entlang welcher das Fahrzeugeinbauteil 10 in einer im wesentlichen vertikalen Richtung verschieblich ist. Das Fahrzeugeinbauteil 10 bzw. der Sitz 10a weist hierzu ein Sitzgestell 14 auf, das mit beiderseitigen Laufwägen 15 versehen ist, die in den Führungsschienen 13 geführt sind. Des weiteren weist die Vorrichtung 12 den beiden Führungsschienen 13 zugeordnete Verriegelungseinrichtungen 16 auf, um das Fahrzeugeinbauteil 10 in der oberen Position zu verriegeln, sowie weitere, ebenfalls den beiden Führungsschienen 13 zugeordnete Verriegelungseinrichtungen 17, um das Fahrzeugeinbauteil 10 gegenüber den Führungsschienen 13 in der unteren Position zu verriegeln. Die Verriegelungseinrichtungen 16 und 17 können dabei von bekannter Bauart sein, beispielsweise in der Form, dass ein an dem Sitzgestell 14 angebrachtes Teil in ein an dem Rahmen 9a oder den Führungsschienen 13 angebrachtes Teil eingreift. Auf die spezielle Konstruktion der Verriegelungseinrichtungen 16 und 17 wird im Folgenden jedoch nicht näher eingegangen.

Die Vorrichtung 12 weist des weiteren zwei den Führungsschienen 13 zugeordnete Gasfederelemente 18 auf, welche an dem Sitzgestellt 14 angreifen und auf diese Weise das Fahrzeugeinbauteil 10 selbsttätig entlang der Führungsschiene 13 in die obere Position verschieben, wenn die Verrieglungseinrichtungen 16 und 17 mittels eines Hebels 19 gelöst werden. Der an dem Sitzgestell 14 angebrachte Hebel 19 dient also zur Entriegelung der Verriegelungseinrichtungen 16 und 17 in ihrer jeweiligen Position, wobei die Verriegelungseinrichtungen 16 und 17 so ausgebildet sein können, dass sie sich in beiden Positionen selbsttätig verriegeln.

Wenn auf diese Weise das Fahrzeugeinbauteil 10 in seine in Fig. 3 dargestellte, obere Position gebracht worden ist, so ist der Zugang zu der Öffnung 11 des abgeschlossenen Raums 9 möglich. In nicht dargestellter Weise kann sich auch innerhalb des Raums 9 ein Hebel befinden, durch den die Verriegelungseinrichtungen 16 und 17 entriegelt werden können. Im vorliegenden Fall ist die Öffnung 11 des Raums 9 in Richtung des Innenraums 1a mittels eines Rollladens 20 verschließbar, der beispielsweise von innerhalb des Raums 9 geöffnet werden kann.

Um einen möglichst geringen Platzbedarf des Sitzes 10a zu erreichen, weist derselbe im vorliegenden Fall eine gegenüber einer Rückenlehne 21 des Sitzes 10a klappbare Sitzfläche 22 auf. Des Weiteren ist der Sitz 10a im vorliegenden Fall mit einem Dreipunktgurt 23 versehen, der sich über die Rückenlehne 21 und in nicht dargestellter Weise auch über die Sitzfläche 22 erstreckt.

Alternativ zu der Ausführung als Sitz 10a könnte es sich bei dem Fahrzeugeinbauteil 10 auch um einen Schrank, insbesondere einen sogenannten Reisebegleiterschrank oder einen Kühlschrank handeln, der mittels der Vorrichtung 12 zwischen der unteren, die Öffnung 11 des Raums 9 versperrenden und der oberen, die Öffnung 11 des Raums 9 zugänglich machenden Position verstellbar ist.

Statt der beiden Führungsschienen 13 könnte gegebenenfalls auch lediglich eine Führungsschiene 13 vorgesehen sein, wobei in diesem Fall selbstverständlich auch lediglich ein Laufwagen 15, jeweils einen der Verrieglungseinrichtungen 16 und 17 und jeweils ein Gasfederelement 18 erforderlich wäre.

## Patentansprüche

1. Vorrichtung (12) zur Ermöglichung des Zugangs zu einem abgeschlossenen Raum (9) innerhalb eines Kraftfahrzeugs (1), insbesondere eines Omnibusses, wobei der Raum (9) eine für eine Person zugängliche Öffnung (11) zu dem Innenraum (1a) des Kraftfahrzeugs (1) aufweist,
**dadurch gekennzeichnet,**
**dass** vor der Öffnung (11) des Raums (9) ein Fahrzeugeinbauteil (10) angeordnet ist, welches zwischen wenigstens zwei Positionen derart bewegbar ist, dass die Öffnung (11) in einer unteren Position des Fahrzeugeinbauteils (10) durch dasselbe versperrt und in einer oberen Position des Fahrzeugeinbauteils (10) von dem Innenraum (1a) des Kraftfahrzeugs (1) her zugänglich ist, wobei das Fahrzeugeinbauteil (10) in seiner unteren Position für eine neben der Versperrfunktion andere zweite Funktion nutzbar ist.

2. Vorrichtung nach Anspruch 1,
**dadurch gekennzeichnet,**
**dass** das Fahrzeugeinbauteil (10) entlang wenigstens einer Führungsschiene (13) in einer im Wesentlichen vertikalen Richtung verschieblich ist.

3. Vorrichtung nach Anspruch 2,
**dadurch gekennzeichnet,**
**dass** das Fahrzeugeinbauteil (10) gegenüber der wenigstens einen Führungsschiene (13) mittels jeweiliger Verriegelungseinrichtungen (16,17) in der oberen Position und der unteren Position verriegelbar ist.

4. Vorrichtung nach Anspruch 2 oder 3,
**dadurch gekennzeichnet,**
**dass** das Fahrzeugeinbauteil (10) wenigstens einen in der wenigstens einen Führungsschiene (13) geführten Laufwagen (15) aufweist.

5. Vorrichtung nach Anspruch 2, 3 oder 4,
**dadurch gekennzeichnet,**
**dass** das Fahrzeugeinbauteil (10) wenigstens ein Gasfederelement (18) zum selbsttätigen Verschieben des Fahrzeugeinbauteils (10) entlang der wenigstens einen Führungsschiene (13) aufweist.

6. Vorrichtung nach einem der Ansprüche 1 bis 5,
**dadurch gekennzeichnet,**
**dass** das Fahrzeugeinbauteil (10) ein Sitz (10a) ist.

7. Vorrichtung nach den Ansprüchen 3 und 6,
**dadurch gekennzeichnet,**
**dass** der Sitz (10a) ein Sitzgestell (14) aufweist, an dem die Verriegelungseinrichtungen (16,17) angebracht sind.

8. Vorrichtung nach Anspruch 6 oder 7,
**dadurch gekennzeichnet,**
**dass** der Sitz (10a) eine gegenüber einer Rückenlehne (21) des Sitzes (10a) klappbare Sitzfläche (22) aufweist.

9. Vorrichtung nach Anspruch 6, 7 oder 8,
**dadurch gekennzeichnet,**
**dass** der Sitz (10a) einen Dreipunktgurt () aufweist.

10. Vorrichtung nach einem der Ansprüche 1 bis 5,
**dadurch gekennzeichnet,**
**dass** das Fahrzeugeinbauteil (10) ein Kühlschrank ist.

11. Vorrichtung nach einem der Ansprüche 1 bis 10,
**dadurch gekennzeichnet,**
**dass** die Öffnung (11) des Raums (9) mittels eines Rollladens (20) verschließbar ist.

12. Kraftfahrzeug (1), insbesondere Omnibus, mit einem innerhalb desselben sich befindlichen, abgeschlossenen Raum (10a) und mit einer Vorrichtung (12) zur Ermöglichung des Zugangs zu dem abgeschlossenen Raum (10a) nach einem der Ansprüche 1 bis 11.

13. Kraftfahrzeug (1) nach Anspruch 12,
**dadurch gekennzeichnet,**
**dass** der abgeschlossene Raum (9) sich in einem vorderen Einstiegsbereich (2) desselben befindet.

## Claims

1. Device (12) for allowing access to a closed space (9) inside an automotive vehicle (1), in particular a bus, wherein the space (9) has an opening (11) to the interior (1a) of the automotive vehicle (1), which opening is accessible to a person, **characterized in that** a vehicle fixture (10) is arranged in front of the opening (11) of the space (9), said vehicle fixture being moveable between at least two positions in such a manner that, in a lower position of the vehicle fixture (10), the opening (11) is blocked by the same and, in an upper position of the vehicle fixture (10), is accessible from the interior (1a) of the automotive vehicle (1), with the vehicle fixture (10) being useable in its lower position for a different, second function in addition to the blocking function.

2. Device according to Claim 1, **characterized in that** the vehicle fixture (10) is displaceable in a substantially vertical direction along at least one guide rail (13).

3. Device according to Claim 2, **characterized in that** the vehicle fixture (10) can be locked in the upper position and the lower position in relation to the at least one guide rail (13) by means of respective locking devices (16, 17).

4. Device according to Claim 2 or 3, **characterized in that** the vehicle fixture (10) has at least one carriage (15) which is guided in the at least one guide rail (13).

5. Device according to Claim 2, 3 or 4, **characterized in that** the vehicle fixture (10) has at least one gas-filled spring element (18) for the automatic displacement of the vehicle fixture (10) along the at least one guide rail (13).

6. Device according to one of Claims 1 to 5, **characterized in that** the vehicle fixture (10) is a seat (10a).

7. Device according to Claims 3 and 6, **characterized in that** the seat (10a) has a seat frame (14) to which the locking devices (16, 17) are attached.

8. Device according to Claim 6 or 7, **characterized in that** the seat (10a) has a seat surface (22) which is foldable in relation to a back rest (21) of the seat (10a).

9. Device according to Claim 6, 7 or 8, **characterized in that** the seat (10a) has a three-point belt ().

10. Device according to one of Claims 1 to 5, **characterized in that** the vehicle fixture (10) is a refrigerator.

11. Device according to one of Claims 1 to 10, **characterized in that** the opening (11) of the space (9) can be closed by means of a roller shutter (20).

12. Automotive vehicle (1), in particular bus, with a closed space (10a) located inside the same and with a device (12) for allowing access to the closed space (10a) according to one of Claims 1 to 11.

13. Automotive vehicle (1) according to Claim 12, **characterized in that** the closed space (9) is located in a front entry region (2) of the same.

## Revendications

1. Dispositif (12) pour permettre l'accès à un espace (9) clos à l'intérieur d'un véhicule automobile (1), en particulier d'un autobus, dans lequel l'espace (9) présente une ouverture (11) accessible pour une personne vers l'habitacle (1a) du véhicule automobile (1), **caractérisé en ce qu'**une pièce d'insertion du véhicule (10) est disposée devant l'ouverture (11), laquelle peut être déplacée entre au moins deux positions de telle sorte que l'ouverture (11) soit fermée dans une position inférieure de la pièce d'insertion du véhicule (10) par celle-ci et soit accessible dans une position supérieure de la pièce d'insertion du véhicule (10) depuis l'habitacle (1a) du véhicule automobile (1), dans lequel la pièce d'insertion du véhicule (10) peut être utile dans sa position inférieure pour une autre deuxième fonction, outre la fonction de fermeture.

2. Dispositif selon la revendication 1, **caractérisé en ce que** la pièce d'insertion du véhicule (10) est mobile le long d'au moins un rail de guidage (13) dans une direction sensiblement verticale.

3. Dispositif selon la revendication 2, **caractérisé en ce que** la pièce d'insertion du véhicule (10) peut être verrouillée par rapport à l'au moins un rail de guidage (13) au moyen de dispositifs de verrouillage (16, 17) respectifs dans la position supérieure et la position inférieure.

4. Dispositif selon la revendication 2 ou 3, **caractérisé en ce que** la pièce d'insertion du véhicule (10) présente au moins un chariot (15) guidé dans l'au moins un rail de guidage (13).

5. Dispositif selon la revendication 2, 3 ou 4, **caractérisé en ce que** la pièce d'insertion du véhicule (10) présente un élément de ressort à gaz (18) pour le déplacement automatique de la pièce d'insertion du véhicule (10) le long de l'au moins un rail de guidage (13).

6. Dispositif selon l'une quelconque des revendications 1 à 5, **caractérisé en ce que** la pièce d'insertion du véhicule (10) est un siège (10a).

7. Dispositif selon les revendications 3 à 6, **caractérisé en ce que** le siège (10a) présente une carcasse de siège (14), sur laquelle sont montés les dispositifs de verrouillage (16, 17).

8. Dispositif selon la revendication 6 ou 7, **caractérisé en ce que** le siège (10a) présente une surface d'assise (22) rabattable par rapport à un dossier (21) du siège (10a).

9. Dispositif selon la revendication 6, 7 ou 8, **caractérisé en ce que** le siège (10a) présente une ceinture trois points ().

10. Dispositif selon l'une quelconque des revendications 1 à 5, **caractérisé en ce que** la pièce d'insertion du véhicule (10) est un réfrigérateur.

11. Dispositif selon l'une quelconque des revendications 1 à 10, **caractérisé en ce que** l'ouverture (11) de l'espace (9) peut être fermée au moyen d'un volet roulant (20).

12. Véhicule automobile (1), en particulier autobus, avec un espace (10a) clos, se trouvant à l'intérieur de celui-ci et avec un dispositif (12) pour permettre l'accès à un espace (10a) clos selon l'une quelconque des revendications 1 à 11.

13. Véhicule automobile (1) selon la revendication 12, **caractérisé en ce que** l'espace (9) clos se trouve dans une zone d'accès (2) avant de celui-ci.
